# EUROPEAN PATENT APPLICATION

(11) **EP 3 209 025 A1**
(43) Date of publication of application: **23.08.2017**
(21) Application number: 15850506.5
(22) Date of filing: 30.06.2015
(51) Int. Cl.: H04N 21/845

(54) **SPLICING METHOD AND SPLICING SYSTEM FOR HTTP LIVE STREAMING MEDIA FRAGMENTATION**

(30) Priority: 17.10.2014 CN 201410555369
(71) Applicant: ZTE Corporation, Shenzhen, Guangdong 518057 (CN)
(72) Inventor: WANG, Jindong, Shenzhen Guangdong 518057 (CN); CHEN, Guangliang, Shenzhen Guangdong 518057 (CN); ZHAO, Pei, Shenzhen Guangdong 518057 (CN)
(74) Representative: HGF Limited
(86) International application number: PCT/CN2015/082975
(87) International publication number: WO 2016/058411

(57) **Abstract**

Provided are a splicing method and splicing system for HTTP live streaming fragments. A splicing device splices data of Transport Stream (TS) fragment files cited in an HLS sub-index file to obtain one or more media files; and a modification device modifies the HLS sub-index file, and records a media file in which each cited TS fragment file lies and location information of each cited TS fragment file in the media file into the modified HLS sub-index file.

## Description

### Technical Field

The document relates to the OTT (Over The Top) TV field, in particular to a splicing method and a splicing system for HyperText Transfer Protocol Live Streaming (HLS) fragments.

### Background

OTT TV refers to a service of transmitting IP videos and performing Internet application integration to Internet connected devices (televisions, PCs and mobile terminals) through public Internet. OTT TV is a service aggregate dominated by interactive audio and video services and integrated with various technologies such as Internet and multimedia communication and the like, and can provide various services such as videos, information and games to any terminal user at any place at any time.

A difference of OTT TV from traditional IPTV (Internet Protocol Television) lies in that a service operator does not need to specially establish a dedicated network for OTT TV and services can be provided for users on public Internet and mobile networks on which there are no management and no QoS (Quality of Service) to guarantee.

With the rapid popularization of terminals such as iPhone, iPad and iPod touch and the like of the Apple company, an HLS (HyperText Transfer Protocol Live Streaming) technology brought thereby becomes a mainstream fact standard for OTT TV, and is a draft of the international standardization organization IETF (Internet Engineering Task Force) at present and is supported by numerous manufacturers.

Since OTT TV is based on public Internet or mobile networks, bandwidth of users cannot be controlled, and bandwidth of users change with time at different places and different time or at the same place and different time. In addition, OTT audio and video programs need to be transmitted to various devices such as STBs (Set Top Boxes), PCs (Personal Computers), PADs/Tablets and smart phones, and these different devices have different requirements on OTT audios and videos, and a proper resolution and code rate needs to be transmitted. Adaptive code rate characteristic of HLS and wide applicability of HTTP (Hyper Text Transfer Protocol) can adapt to situations of user bandwidth fluctuation and unevenness, such that users can obtain program streams with code rates adaptive to current bandwidth to guarantee uninterrupted viewing of users.

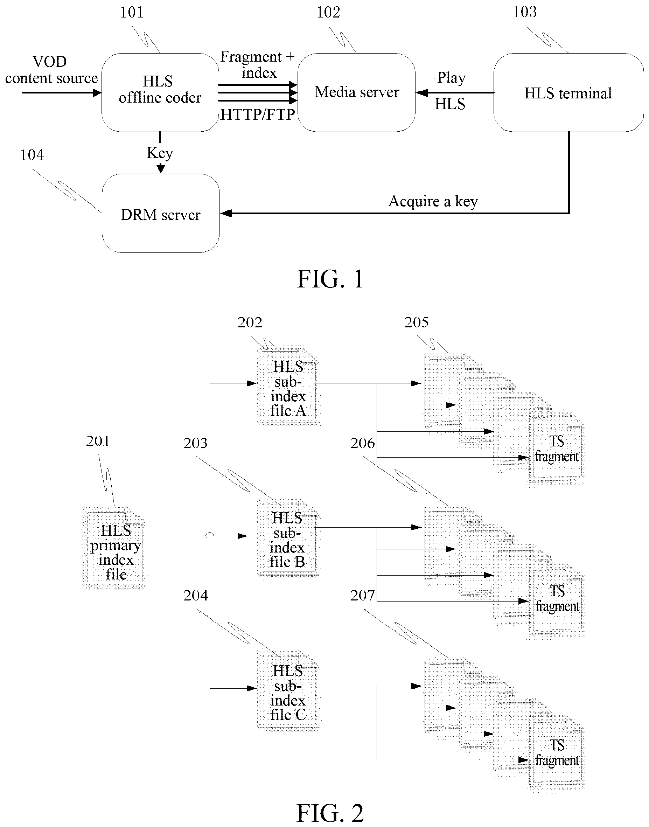

System architecture of the HLS technology is as illustrated in FIG. 1.

An HLS offline coder 101 codes a VOD (Video On Demand) content source into code streams with different resolutions and code rates, performs fragment and delivers generated TS (Transport Stream) fragment files and index files to a media server 102. An HLS terminal 103 accesses through Internet or a mobile network, acquires keys from a DRM (Digital Right Management) server 104, and acquires the index files and the fragment files from the media server 102 to perform decoding and then play.

Herein, an organization structure of files pushed by the HLS offline coder 101 to the media server 102 is as illustrated in FIG. 2.
▪ In FIG. 2, a first column from left is an HLS primary index file 201, and the HLS primary index file 201 identifies different profiles (mainly different resolutions and code rates) of availability of content, and records information of HLS sub-index files of different profiles thereunder.
▪ A second column is HLS sub-index files 202, 203, 204, and HLS sub-index files 202, 203, 204 describe paths and play sequences of TS fragment files corresponding to each profile, media file decoding manners, URLs for acquiring keys, etc.
▪ A third column is TS fragment files 205, 206, 207, and the HLS offline coder 101 fragments an input VOD content source into TS fragment files, and media contents in fragment files have certain play durations such as 2-10s.
▪ Multiple fragment files of each profile are saved under respective folders (the fragment files may also be saved with different file names in the same folder).

However, as found in practice, in a large-capacity system which are required to support HLS protocols certainly, there are situations such as that the number of files is too great, the file system pressure is comparatively great, the storage efficiency is not high, disk IO (Input/Output) speed is decreased and the content delivery efficiency between CDN (Content Delivery Network) nodes is low. Upon analysis, reasons are as follows:
(1) To facilitate timely and rapid switching of code rate during network bandwidth fluctuation, a duration of each TS fragment is generally 2-10s. Supposing that the duration is fixed to be 10s, for a VOD program usually having a duration of 1hour, 360 TS fragments are needed for each profile. If there are three profiles, totally there are 1080 TS fragments. If there are 500,000 VOD contents in a commercial system, 540,000,000 fragment files are needed and the requirement on maximum file number supported by the file system is comparatively high. In addition, meta-information of these files often needs to be stored in an internal memory to accelerate file access speed, which needs to consume a great memory space.
(2) Files are generally stored in storage devices by blocks, and the size of storage blocks allocated by the file system can be configured but is globally uniform. However, for download services of high-definition and standard-definition video file or large file, the size of storage blocks is usually set to be 64MB (Mega Bytes). Supposing that an average code rate of TS fragments of the highest HLS profile in a system is 4Mbps, the size of each TS file of this profile is about 10s*4Mbps/8=5MB. The system allocates a storage block for this file, but 59MB of the storage block is wasted. The spaces wasted by TS fragment files of other profiles are more. As a result, the effective utilization rate of the storage space is very low.
(3) Since TS fragment files in the file system are small and many, a magnetic head needs to uninterruptedly start, stop and address during access, and the disk IO speed is much slower than the IO speed of large files, and consequently the system performance is seriously decreased.

### Summary

The present invention provides a splicing method for HTTP Live Streaming (HLS) fragments, including:
splicing data of Transport Stream (TS) fragment files cited in an HLS sub-index file to obtain one or more media files; and
modifying the HLS sub-index file, and recording a media file in which each cited TS fragment file lies and location information of each cited TS fragment file in the media file into the modified HLS sub-index file.

In an exemplary embodiment, splicing data of TS fragment files cited in an HLS sub-index file to obtain one or more media files includes:
for an HLS sub-index file corresponding to each profile under the same HLS primary index file, splicing data of all TS fragment files cited in the HLS sub-index file to obtain a media file; or
for an HLS sub-index file corresponding to each profile under the same HLS primary index file, splicing data of all TS fragment files cited in the HLS sub-index file to obtain multiple media files; or
for multiple HLS sub-index files corresponding to multiple profiles under the same HLS primary index file, splicing data of all TS fragment files cited in the HLS sub-index file to obtain one or more media files.

In an exemplary embodiment, modifying the HLS sub-index file further includes: recording a path of the media file in which each cited TS fragment file lies into the modified HLS sub-index file.

In an exemplary embodiment, splicing data of TS fragment files cited in an HLS sub-index file further includes:
sequentially splicing data of TS fragment files cited in the HLS sub-index file according to a play sequence of TS fragment files which is recorded in the HLS sub-index file or a splicing sequence which is additionally set.

In an exemplary embodiment, after splicing data of TS fragment files cited in an HLS sub-index file to obtain one or more media files, the splicing method further includes: adding an information field/fields used for indicating a media file format in the media file/files.

In an exemplary embodiment, a name of the media file includes one or more pieces of the following information:
a type of the media file; a profile to which TS fragment files contained in the media file belong; and a code rate corresponding to the profile to which TS fragment files contained in the media file belong.

The present invention further provides a splicing system for HTTP Live Streaming (HLS) fragments, including:
a splicing device configured to splice data of Transport Stream (TS) fragment files cited in an HLS sub-index file to obtain one or more media files; and
a modification device configured to modify the HLS sub-index file, and record a media file in which each cited TS fragment file lies and location information of each cited TS fragment file in the media file into the modified HLS sub-index file.

In an exemplary embodiment, the splicing device is configured to:
for an HLS sub-index file corresponding to each profile under the same HLS primary index file, splice data of all TS fragment files cited in the HLS sub-index file to obtain a media file; or
for an HLS sub-index file corresponding to each profile under the same HLS primary index file, splice data of all TS fragment files cited in the HLS sub-index file to obtain multiple media files; or
for multiple HLS sub-index files corresponding to multiple profiles under the same HLS primary index file, splice data of all TS fragment files cited in the HLS sub-index file to obtain one or more media files.

In an exemplary embodiment, the modification device is further configured to record a path of the media file in which each cited TS fragment file lies into the modified HLS sub-index file.

In an exemplary embodiment, the splicing device is configured to:
sequentially splice data of TS fragment files cited in the HLS sub-index file according to a play sequence of TS fragment files which is recorded in the HLS sub-index file or a splicing sequence which is additionally set.

In an exemplary embodiment, the splicing device is further configured to add an information field/fields used for indicating a media file format in the media file/files.

In an exemplary embodiment, a name of the media file obtained by the splicing device through splicing includes one or more pieces of the following information:
a type of the media file; a profile to which TS fragment files contained in the media file belong; and a code rate corresponding to the profile to which TS fragment files contained in the media file belong.

A computer-readable storage medium stores computer-executable instructions used for executing the method.

In the above-mentioned solution, by splicing HLS fragments and correspondingly modifying an HLS sub-index file, at least one of the following technical effects can be achieved: the system which supports HLS protocols can be better implemented; the pressure of the file system is reduced; the utilization rate of the storage space of the system is improved; the disk IO speed is improved and the content delivery efficiency between CDN nodes is improved.

### Brief Description of Drawings

FIG. 1 illustrates a schematic diagram of a system architecture of a traditional HLS technology.
FIG. 2 illustrates a schematic diagram of an organization structure of traditional HLS files.
FIG. 3 illustrates a flowchart of a splicing method for HLS fragments according to an embodiment of the present invention.
FIG. 4 illustrates a modular diagram of a splicing system for HLS fragments according to an embodiment of the present invention.

### Detailed Description

The implementation modes of the present invention will be described below in detail with reference to the drawings. It needs to be stated that the embodiments of the present invention and the features in the embodiments may be mutually and freely combined under the situation of no conflict.

### Embodiment one

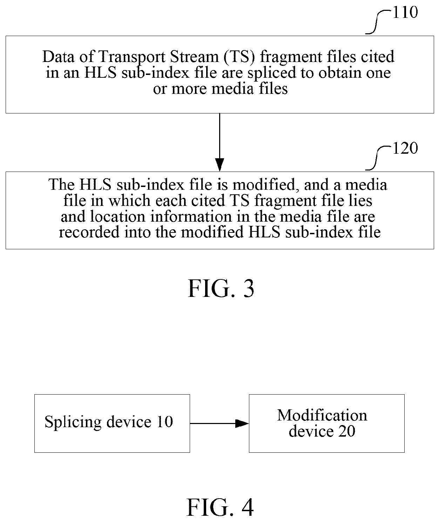

A flowchart of a splicing method for HLS fragments in the embodiment is as illustrated in FIG. 3. The splicing method includes the following steps.

In step 110, data of Transport Stream (TS) fragment files cited in an HLS sub-index file are spliced to obtain one or more media files.

In this step, data of TS fragment files cited in the HLS sub-index file are spliced by adopting but not limited to the following modes:
for an HLS sub-index file corresponding to each profile under the same HLS primary index file, data of all TS fragment files cited in the HLS sub-index file are spliced to obtain a media file; or
for an HLS sub-index file corresponding to each profile under the same HLS primary index file, data of all TS fragment files cited in the HLS sub-index file are spliced to obtain multiple media files; or
for multiple HLS sub-index files corresponding to multiple profiles under the same HLS primary index file, data of all TS fragment files cited in the HLS sub-index files are spliced to obtain one or more media files.

Information which needs to be obtained during splicing includes, for example, an HLS sub-index file of each profile, paths of TS fragments cited in HLS sub-index file, etc., and may be obtained by parsing an HLS primary index file or corresponding HLS sub-index files.

In this step, in an exemplary embodiment, data of TS fragment files cited in the HLS sub-index file are sequentially spliced according to a play sequence of TS fragment files which is recorded in the HLS sub-index file or a splicing sequence which is additionally set. The splicing sequence which is additionally set refers to a sequence of splicing not according to the play sequence. For example, splicing according to a set sequence of odd fragments and then even fragments, when there are 6 fragments, data are spliced according to a sequence of 1, 3, 5, 2, 4, 6. For another example, splicing according to a set sequence from two ends to middle, when there are 6 fragments, data are spliced according to a sequence of 1, 6, 2, 5, 3, 4; and so on. In embodiments of the present invention, the splicing sequence is not limited.

In an exemplary embodiment, a name of the one or more media files obtained through splicing includes one or more piece of the following information: a type of the media file; a profile to which TS fragment files contained in the media file belong; and a code rate corresponding to the profile to which TS fragment files contained in the media file belong.

In an exemplary embodiment, an information field used for indicating a media file format is added in the one or more media files obtained through splicing.

In step 120, the HLS sub-index file is modified, and the media file in which each cited TS fragment file lies and location information of each cited TS fragment file in the media file are recorded into the modified HLS sub-index file.

In this step, the operation of modifying the HLS sub-index file may further includes: a path of the media file in which each cited TS fragment file lies is recorded into the modified HLS sub-index file.

In an exemplary embodiment, when the HLS sub-index file is modified, the name of the HLS sub-index file may also be modified. At this moment, the HLS primary index file to which the HLS sub-index file belongs needs to be correspondingly modified, and the name of the HLS sub-index file in the HLS primary index file is updated to the modified name of the HLS sub-index file.

Correspondingly, a splicing system for HLS fragments in the embodiment is as illustrated in FIG. 4. The splicing system includes a splicing device 10 and a modification device 20.

The splicing device 10 is configured to splice data of Transport Stream (TS) fragment files cited in an HLS sub-index file to obtain one or more media files.

The modification device 20 is configured to modify the HLS sub-index file, and record the media file in which each cited TS fragment file lies and location information of each cited TS fragment file in the media file into the modified HLS sub-index file.

In an exemplary embodiment, the operation that the splicing device 10 splices data of TS fragment files cited in an HLS sub-index file includes the following operation:
for an HLS sub-index file corresponding to each profile under the same HLS primary index file, splicing data of all TS fragment files cited in the HLS sub-index file to obtain a media file; or
for an HLS sub-index file corresponding to each profile under the same HLS primary index file, splicing data of all TS fragment files cited in the HLS sub-index file to obtain multiple media files; or
for multiple HLS sub-index files corresponding to multiple profiles under the same HLS primary index file, splicing data of all TS fragment files cited in the HLS sub-index file to obtain one or more media files.

In an exemplary embodiment, the operation that the modification device 20 modifies the HLS sub-index file further includes the following operation: recording a path of the media file in which each cited TS fragment file lies into the modified HLS sub-index file.

In an exemplary embodiment, the operation that the splicing device 10 splices data of TS fragment files cited in the HLS sub-index file includes that:
data of TS fragment files cited in the HLS sub-index file are sequentially spliced according to a play sequence of TS fragment files which is recorded in the HLS sub-index file or a splicing sequence which is additionally set.

In an exemplary embodiment, after the splicing device 10 splices data of TS fragment files cited in the HLS sub-index file to obtain one or more media files, the splicing device 10 is further configured to add an information field/fields used for indicating a media file format in the media file/files.

In an exemplary embodiment, a name of the media file obtained by the splicing device 10 through splicing includes one or more pieces of the following information: a type of the media file; a profile to which TS fragment files contained in the media file belong; and a code rate corresponding to the profile to which TS fragment files contained in the media file belong.

In an exemplary embodiment, the operation that the modification device 20 modifies the HLS sub-index file further includes: modifying the name of the HLS sub-index file.

The modification device 20 is further configured to modify the HLS primary index file to which the HLS sub-index file belongs, and update the name of the HLS sub-index file in the HLS primary index file to the modified name of the HLS sub-index file.

The above-mentioned splicing system may be arranged in any one or more devices (such as media servers) having a logical operation capability or the above-mentioned splicing method is implemented on any one or more devices having a logical operation capability. Index files and fragment files used by the splicing system during splicing may be pushed by an HLS offline coder or other devices, and may also be downloaded by the splicing system itself.

In the splicing method and system provided by the embodiments, by splicing the HLS fragments into the media files, the number of files is greatly reduced, and the pressure of the file system is decreased, e.g., the maximum file number which needs to be supported is reduced, and the memory space needed for storing corresponding file information is decreased. Correspondingly, start, stop and addressing operations of the magnetic head are also greatly reduced during access, and the disk IO speed can be increased. Besides, since the media file is greater than the TS fragment files, when storage blocks are allocated, the waste of the storage space is reduced. Thereby, the system which supports HLS protocols is better implemented, e.g., the content delivery efficiency between CDN nodes is improved. In addition, in the above-mentioned splicing method, after splicing is performed, the HLS sub-index file is correspondingly modified and thus almost no influence is caused to other devices in the HLS system.

The above-mentioned splicing method will be described below by using an application example.

It is supposed that an HLS primary index file in this example includes the following contents:

```
     #EXTM3U
     #EXT-X-STREAM-INF:PROGRAM-ID=1,BANDWIDTH=512000
     01.m3u8
     #EXT-X-STREAM-INF:PROGRAM-ID=1,BANDWIDTH=768000
     02.m3u8
     #EXT-X-STREAM-INF:PROGRAM-ID=1,BANDWIDTH=1024000
     03.m3u8
```

By parsing the above-mentioned contents, it can be seen that the HLS contents have three available profiles: for a first profile, a code rate is 512kbps and an HLS sub-index file is 01.m3u8; for a second profile, a code rate is 768kbps and an HLS sub-index file is 02.m3u8; and for a third profile, a code rate is 1024kbps and an HLS sub-index file is 03.m3u8.

Herein, as an example, the HLS sub-index file 01.m3u8 includes the following contents:

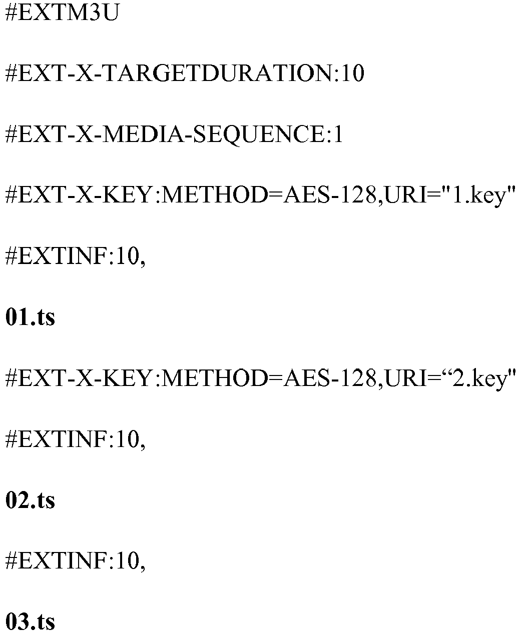

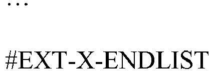

By parsing the above-mentioned contents, it can be seen that the HLS sub-index file 01.m3u8 cites multiple TS fragment files, including a first TS fragment file which is 01.ts, a second TS fragment file which is 02.ts, a third TS fragment file which is 03.ts, etc. Other contents involve a play sequence, a maximum media segment duration, a media file decryption manner, a URL for acquiring a key, etc., which are not described here in detail.

Then, data of TS fragment files cited in the HLS sub-index file 01.m3u8 are spliced to obtain one or more media files.

As an example, data of all TS fragment files cited in the HLS sub-index file 01.m3u8 are sequentially spliced together according to the play sequence to obtain a larger media file zott_01_512.ts, and a location of each TS fragment file in the media file obtained after splicing is recorded at the same time. For example, start-end location of a first TS fragment in the media file obtained after splicing is from 0th byte to 18799th byte; start-end location of a second TS fragment in the media file obtained after splicing is from 18800th byte to 39479th byte; start-end location of a third TS fragment in the media file obtained after splicing is from 39480th byte to 60000th byte; and so on. Of course, during splicing, the TS fragment files are uncertainly spliced according to the play sequence and may be spliced according to a splicing sequence which is additionally set. Some self-defined information fields may be added in the media file obtained after splicing to define a specific media file format, etc.

Although, for an HLS sub-index file corresponding to each profile under the same HLS primary index file, data of all TS fragment files cited in the HLS sub-index file are spliced to obtain a media file, different splicing modes may be adopted according to the number and size of the TS fragment files. For example, for an HLS sub-index file corresponding to each profile under the same HLS primary index file, data of all TS fragment files cited in the HLS sub-index file are spliced to obtain multiple media files; or, for multiple HLS sub-index files corresponding to multiple profiles under the same HLS primary index file, data of all TS fragment files cited in the HLS sub-index files are spliced to obtain one or more media files, etc.

In the above-mentioned example, a rule for naming the media file obtained after splicing is as follow:
zott_${id}_${bitrate}.ts
where:
   the prefix zott field is a fixed value and represents a type of the media file;
   ${id} field is a profile number and each profile corresponds to a number, such as 01, 02, 03...;
   ${bitrate} field is a code rate corresponding to a profile (unit: kbps);
   every two fields are spaced by an underline; and
   .ts represents a file extension.

For names of media files, a naming rule thereof may be self-defined during implementation.

Then, the HLS sub-index file 01.m3u8 is modified, and the media file in which each cited TS fragment file lies and location information of each cited TS fragment file in the media file are recorded into the modified HLS sub-index file 01.m3u8.

In this example, the contents of the modified HLS sub-index file 01.m3u8 are as follows:

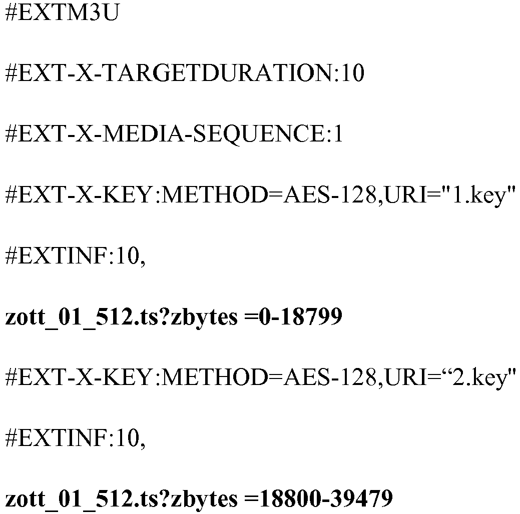

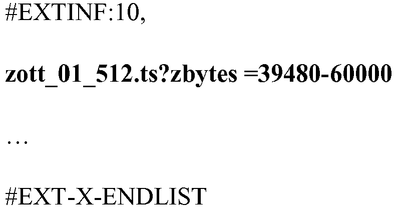

**zott_01_512.ts** in the above-mentioned contents represents a media file in which a TS fragment file lies, and zbytes field represents start-end byte of the TS fragment file in the media file and is used for representing location information of the TS fragment file in the media file. Of course, other fields may also be adopted for representation. For example, similar representation ways such as from=xxx&to=yyy or start=xxx&end=yyy may be adopted.

A path of a media file in which a TS fragment file lies may be a relative path and may also be an absolute path. If the media file obtained after splicing is stored under other directories or on other hosts, or even a certain network location of cloud storage, the path of the media file further needs to be recorded, e.g.: http://www.sample.com/ott/zott_01_512.ts?zbytes=0-18799

According to the similar mode, after TS fragment files cited in the HLS sub-index file 02.m3u8 and the HLS sub-index file 03.m3u8 of other two profiles are spliced, and the modification of the HLS sub-index file 02.m3u8 and the HLS sub-index file 03.m3u8 is completed, then the splicing of the entire HLS content is completed. After splicing, an HLS file list in a directory is shown as follow:
index.m3u8
01.m3u8
02.m3u8
03.m3u8
zott_0_512.ts
zott_1_768.ts
zott_2_1024.ts

The above-mentioned file list includes a primary index file index.m3u8, HLS sub-index files 01.m3u8, 02.m3u8 and 03.m3u8 of three profiles, and three media files obtained after splicing, i.e., zott_0_512.ts, zott_1_768.ts and zott_2_1024.ts.

In addition, the names of the HLS primary index file and the HLS sub-index files may be kept unchanged and may also be modified. If the names of the HLS sub-index files are modified, the names of the HLS sub-index files in the HLS primary index file need to be modified at the same time.

One ordinary skilled in the art can understand that all or partial steps in the above-mentioned embodiments may be implemented by using a computer program, and the computer program may be stored in a computer-readable storage medium, the computer program is executed on a corresponding hardware platform (such as a system, equipment, apparatus or device), and one or a combination of steps of the method embodiments is included during execution.

In an exemplary embodiment, all or partial steps of the above-mentioned embodiments may also be implemented by using integrated circuits, and these steps may be respectively manufactured into integrated circuit modules, or multiple modules or steps thereof are manufactured into a single integrated circuit module to implement.

Each device/function module/function unit in the above-mentioned embodiments may be implemented by adopting a general-purpose computing device, and they may be integrated on a single computing device and may also be distributed on a network consisting of multiple computing devices.

When each device/function module/function unit in the above-mentioned embodiments is implemented by means of software function module and is sold or used as an independent product, it may be stored in a computer-readable storage medium. The above-mentioned computer-readable storage medium may be a read-only memory, a magnetic disk, a compact disk or the like.

### Industrial Applicability

In the embodiments of the present invention, by splicing HLS fragments and correspondingly modifying an HLS sub-index file, the system which supports HLS protocols can be better implemented; the pressure of the file system is reduced; the utilization rate of the storage space of the system is improved; the disk IO speed is improved and the content delivery efficiency between CDN nodes is improved.

## Claims

1. A splicing method for HyperText Transfer Protocol Live Streaming, HLS, fragments, comprising:
splicing data of Transport Stream, TS, fragment files cited in an HLS sub-index file to obtain one or more media files; and
modifying the HLS sub-index file, and recording a media file in which each cited TS fragment file lies and location information of the each cited TS fragment file in the media file into the modified HLS sub-index file.

2. The splicing method according to claim 1, wherein:
the splicing data of TS fragment files cited in an HLS sub-index file to obtain one or more media files comprises:
for an HLS sub-index file corresponding to each profile under a same HLS primary index file, splicing data of all TS fragment files cited in the HLS sub-index file to obtain a media file; or
for an HLS sub-index file corresponding to each profile under a same HLS primary index file, splicing data of all TS fragment files cited in the HLS sub-index file to obtain a plurality of media files; or
for a plurality of HLS sub-index files corresponding to a plurality of profiles under the same HLS primary index file, splicing data of all TS fragment files cited in the HLS sub-index files to obtain one or more media files.

3. The splicing method according to claim 1, wherein:
the modifying the HLS sub-index file further comprises: recording a path of the media file in which each cited TS fragment file lies into the modified HLS sub-index file.

4. The splicing method according to claim 1, 2 or 3, wherein:
the splicing data of TS fragment files cited in an HLS sub-index file further comprises:
sequentially splicing data of TS fragment files cited in the HLS sub-index file according to a play sequence of TS fragment files which is recorded in the HLS sub-index file or a splicing sequence which is additionally set.

5. The splicing method according to claim 1, wherein:
after the splicing data of TS fragment files cited in an HLS sub-index file to obtain one or more media files, the splicing method further comprises: adding an information field/fields used for indicating a media file format in the media file/files.

6. The splicing method according to claim 1, 2, 3 or 5, wherein:
a name of the media file comprises one or more pieces of the following information:
a type of the media file; a profile to which TS fragment files contained in the media file belong; and a code rate corresponding to the profile to which TS fragment files contained in the media file belong.

7. A splicing system for HyperText Transfer Protocol Live Streaming, HLS, fragments, comprising:
a splicing device configured to splice data of Transport Stream, TS, fragment files cited in an HLS sub-index file to obtain one or more media files; and
a modification device configured to modify the HLS sub-index file, and record a media file in which each cited TS fragment file lies and location information of the each cited TS fragment file in the media file into the modified HLS sub-index file.

8. The splicing system according to claim 7, wherein:
the splicing device is configured to:
for an HLS sub-index file corresponding to each profile under a same HLS primary index file, splice data of all TS fragment files cited in the HLS sub-index file to obtain a media file; or
for an HLS sub-index file corresponding to each profile under a same HLS primary index file, splice data of all TS fragment files cited in the HLS sub-index file to obtain a plurality of media files; or
for a plurality of HLS sub-index files corresponding to a plurality of profiles under the same HLS primary index file, splice data of all TS fragment files cited in the HLS sub-index files to obtain one or more media files.

9. The splicing system according to claim 7, wherein:
the modification device is further configured to record a path of the media file in which each cited TS fragment file lies into the modified HLS sub-index file.

10. The splicing system according to claim 7, 8 or 9, wherein:
the splicing device is configured to:
sequentially splice data of TS fragment files cited in the HLS sub-index file according to a play sequence of TS fragment files which is recorded in the HLS sub-index file or a splicing sequence which is additionally set.

11. The splicing system according to claim 7, wherein:
the splicing device is further configured to add an information field/fields used for indicating a media file format in the media file/files.

12. The splicing system according to claim 7, 8, 9 or 11, wherein:
a name of the media file obtained by the splicing device through splicing comprises one or more pieces of the following information:
a type of the media file; a profile to which TS fragment files contained in the media file belong; and a code rate corresponding to the profile to which TS fragment files contained in the media file belong.

13. A computer-readable storage medium storing computer-executable instructions, wherein the computer-executable instructions are used for executing the method according to any one of claims 1-6.
